(19) Europäisches Patentamt
European Patent Office
Office européen des brevets

(11) Veröffentlichungsnummer: **0 229 956**
**A1**

(12) **EUROPÄISCHE PATENTANMELDUNG**

(21) Anmeldenummer: **86116929.0**

(22) Anmeldetag: **05.12.86**

(51) Int. Cl.⁴: **C 08 K 3/20**, C 08 K 3/26, C 08 L 69/00 // (C08L69/00, 51:00, 25:04, 35:06, 33:12, 27:18)

(30) Priorität: **14.12.85 DE 3544295**

(43) Veröffentlichungstag der Anmeldung: **29.07.87 Patentblatt 87/31**

(84) Benannte Vertragsstaaten: **DE ES FR GB IT NL**

(71) Anmelder: **BAYER AG, Konzernverwaltung RP Patentabteilung, D-5090 Leverkusen 1 Bayerwerk (DE)**

(72) Erfinder: **Kirsch, Jürgen, Dr., Hahnenweg 1, D-5000 Köln 80 (DE)**
Erfinder: **Peters, Horst, Dr., Winterberg 25, D-5090 Leverkusen 3 (DE)**
Erfinder: **Baasch, Peter, Vinzenz-Feckter-Strasse 17, D-5060 Bergisch-Gladbach 2 (DE)**
Erfinder: **Kress, Hans-Jürgen, Dr., Scheiblerstrasse 111, D-4150 Krefeld (DE)**
Erfinder: **Lindner, Christian, Dr., Riehler Strasse 200, D-5000 Köln 60 (DE)**

(54) **Thermoplastische Formmassen mit hoher Kriechstromfestigkeit.**

(57) Gegenstand der vorliegenden Erfindung sind Formmassen, enthaltend halogenierte Copolycarbonate, Pfropfpolymerisate auf Basis eines Acrylatkautschuks, thermoplastische Copolymerisate, Tetrafluorethylenpolymerisate, Metallverbindungen aus Antimon oder Wismut, $TiO_2$ sowie gegebenenfalls niedermolekulare, organische Halogenverbindungen, Stabilisatoren, Fließmittel, Antistatika und/oder Entformungsmittel, sowie ein Verfahren zur Herstellung dieser Formmassen.

EP 0 229 956 A1

0229956

BAYER AKTIENGESELLSCHAFT 5090 Leverkusen, Bayerwerk
Konzernverwaltung RP
Patentabteilung PS/m-c

# Thermoplastische Formmassen mit hoher Kriechstromfestigkeit

Aus der DE-OS 3 322 260 sind flammwidrige thermoplastische Formmassen bekannt, auf Basis von Polycarbonaten, mit Styrol/Acrylnitril bepfropften Kautschuken (= SAN-Pfropfpolymerisate), thermoplastischen Polymerisaten, Halogenverbindungen, Antimon und feinteiligem Polytetrafluorethylen (PTFE), wobei das PTFE durch Mischen mit einer Emulsion des SAN-Pfropfpolymerisats und gegebenenfalls des thermoplastischen Polymerisats und gemeinsame Koagulation eingearbeitet wird. Dabei ist das Gewichtsverhältnis von SAN-Pfropfpolymerisat (und gegebenenfalls thermoplastischem Polymerisat) zu PTFE 99,9 zu 0,1 bis 80 zu 20. Als Pfropfbasis für die SAN-Pfropfpolymerisate können Dienkautschuke und Alkylacrylatkautschuke mit einem mittleren Teilchendurchmesser von 0,1 - 2 µm dienen. Die Formmassen zeichnen sich neben der Flammwidrigkeit durch verbesserte thermoplastische Verarbeitbarkeit aus. Sie können auch Ruß enthalten.

Bekannt ist auch, daß ein Zusatz von $TiO_2$ zu Polycarbonat in Mengen von 10 - 50 Gew.-%, bezogen auf Gemisch, dessen Kriechstromfestigkeit verbessert (DE-OS 2 315 887).

Ähnlich wirkt auch der kombinierte Zusatz von Cristobalit und inerten Pigmenten, wobei an Pigmenten 2 - 20 Gew.-%, bezogen auf Polycarbonat, eingesetzt werden (s. DE-OS 2 324 427).

Gemäß DE-OS 2 327 014 werden Quarzmineral- und $TiO_2$-haltigen kriechstromfesten Polycarbonatformmassen noch zusätzlich Alkoxysilangruppen- oder Acyloxysilangruppen-haltige Epoxidgruppen-haltige Vinylpolymerisate zugegeben, um eine Verschlechterung der mechanischen Eigenschaften zu vermeiden.

Aus der DE-OS 2 345 799 sind kriechstromfeste Polycarbonatformmassen bekannt, die einen Gehalt von 0,05 - 10 Gew.-% an Oxidations- und/oder Verbrennungskatalysatoren enthalten. Als solche sind spezielle Metalle und/oder deren Oxide geeignet. Als Trägermaterial für die dem Polycarbonat zuzusetzenden Verbrennungskatalysatoren kann auch $TiO_2$ dienen. Die Mengenverhältnisse Katalysator zu Träger liegen zwischen 1:1 und 1:100.

Gegenstand der vorliegenden Erfindung sind thermoplastische Formmassen, enthaltend

A. 60 - 85 Gew.-% eines 3 - 20 Gew.-% Halogen enthaltenden Copolycarbonats aus einem zweiwertigen Phenol und einem zweiwertigen halogenierten, vorzugsweise bromierten Phenol,

B. 10 - 30 Gew.-% eines Pfropfpolymerisats aus

B.1. 5 - 90 Gew.-Teile, vorzugsweise 30 - 80 Gew.-Teile einer Mischung aus

B.1.1. 50 - 95 Gew.-% Styrol, α-Methylstyrol, kernsubstituiertem Styrol, Methylmethacrylat oder Mischungen daraus und

B.1.2. 50 - 5 Gew.-% (Meth)Acrylnitril, Methylmethacrylat, Maleinsäureanhydrid, N-substituiertem Maleinimid oder Mischungen daraus, auf

B.2. 95 - 10 Gew.-Teile, vorzugsweise 70 - 20 Gew.-Teile, eines Acrylatkautschuks mit einer Glastemperatur $T_G \leq 10^0$ C.

C. 5 - 30 Gew.-% eines thermoplastischen Copolymerisats aus

C.1. 50 - 95 Gew.-% Styrol, α-Methylstyrol, kernsubstituiertem Styrol, Methylmethacrylat oder Mischungen daraus und

C.2. 50 - 5 Gew.-% (Meth)Acrylnitril, Methylmethacrylat, Maleinsäureanhydrid, N-substituiertem Maleinimid oder Mischungen daraus, wobei sich die Prozentzahlen von A, B und C zu 100 addieren müssen,

D. 0,05 - 2,0 Gew.-Teile, insbesondere 0,1 - 1,0 Gew.-Teile, bezogen auf 100 Gew.-Teile aus A + B + C, eines

Tetrafluorethylenpolymerisats mit einer Dichte von 2,0 - 2,3 g/$cm^3$ und einem mittleren Teilchendurchmesser von 100 bis 1000 µm,

E. 1 - 5 Gew.-Teile, vorzugsweise 2 - 4 Gew.-Teile, bezogen auf 100 Gew.-Teile A + B + C, Antimontrioxid, Antimoncarbonat, Wismuttrioxid oder Wismutcarbonat und

F. 4 - 12 Gew.-Teile, vorzugsweise 5 - 10 Gew.-Teile, bezogen auf 100 Gew.-Teile A + B + C, Titandioxid und gegebenenfalls

G. 0 - 15 Gew.-Teile, bezogen auf 100 Gew.-Teile A + B + C einer niedermolekularen, organischen Halogenverbindung, vorzugsweise einer Bromverbindung, wobei der Halogengehalt, resultierend aus den Komponenten A + G, jedoch 20 Gew.-%, bezogen auf Gesamtgewicht der Komponenten A + G, nicht übersteigt.

Die erfindungsgemäßen Formmassen können zusätzlich für thermoplastische Polycarbonate oder Pfropfpolymerisate bekannte Zusätze wie Stabilisatoren, Fließmittel, Antistatika und/oder Entformungsmittel in wirksamen Mengen enthalten.

Die erfindungsgemäßen Formmassen zeichnen sich durch eine Kombination von guter Flammwidrigkeit, Kriechstromfestigkeit, thermischer Belastbarkeit und Verarbeitbarkeit aus. Formkörper aus diesen Formmassen besitzen nach Kriechstrombelastung eine akzeptable Oberflächenqualität.

Erfindungsgemäß geeignete, thermoplastische, aromatische Copolycarbonate gemäß Komponente A sind solche auf Basis der Diphenole der Formel (I)

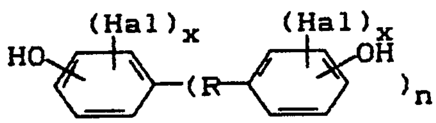
(I)

worin

R eine Einfachbindung, ein $C_1$-$C_5$-Alkylen, ein $C_2$-$C_5$-Alkyliden, ein $C_5$-$C_6$-Cycloalkyliden, -S- oder -$SO_2$-, Halogen (wie Chlor oder Brom), x 0, 1 oder 2 und "n" 1 oder 0 sind, wobei das Copolycarbonat gemäß Komponente A 3 - 20 Gew.-% Halogen, insbesondere Brom, in Form von einkondensierten halogenierten Diphenolen enthält.

Die Diphenole der Formel (I) sind beispielsweise Hydrochinon, Resorcin, 4,4-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan und 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Die Herstellung der als Komponente A geeigneten Polycarbonate ist literaturbekannt und ist beispielsweise mit Phosgen nach dem Phasengrenzflächenverfahren oder mit Phosgen nach den Verfahren in homogener Phase (dem sogenannten Pyridinverfahren) möglich.

Die als Komponente A geeigneten Polycarbonate haben Molekulargewichte (Gewichtsmittel $\bar{M}w$, gemessen durch Ultrazentrifugation oder Streulichtmessung) von 10 000 bis 200 000, vorzugsweise von 20 000 bis 80 000.

Die als Komponente A geeigneten Polycarbonate können verzweigt sein, vorzugsweise durch den bekannten Einbau von 0,05 - 2,0 Mol-%, bezogen auf eingesetzte Diphenole, an drei- oder höherfunktionellen Verbindungen, beispielsweise drei oder höherwertigen Phenolen.

Bevorzugte Copolycarbonate sind solche von Bisphenol A mit bis zu 15 Gew.-%, bezogen auf gesamte Diphenole, an Bis-(3,5-dibrom-4-hydroxyphenyl)-propan (Tetrabrombisphenol A).

Zur Herstellung der Pfropfpolymerisate B sind bekannte Alkylacrylatkautschuke auf der Basis von $C_1$-$C_8$-Alkylacrylaten, insbesondere Ethyl-, Butyl-, Ethylhexylacrylat als Pfropfgrundlage B2 geeignet. Sie können bis zu 30 Gew.-%, bezogen auf Kautschukgewicht, Monomere wie Vinylacetat, Acrylnitril, Styrol, Methylmethacrylat und/oder Vinylether copolymerisiert enthalten.

Ebenfalls geeignet sind teilchenförmige Produkte, die einen vernetzten Dienkautschuk aus einem oder mehreren konjugierten Dienen, wie Polybutadien oder ein Copolymerisat eines konjugierten Diens mit einem ethylenisch ungesättigten Monomer, wie Styrol und/oder Acrylnitril, als Kern und eine Hülle aus Acrylatkautschuk enthalten.

Sie können auch kleinere Mengen, vorzugsweise bis zu 5 Gew.-%, bezogen auf Kautschukgewicht, vernetzend wirkender, ethylenisch ungesättigter Monomerer einpolymerisiert enthalten. Solche Vernetzer sind z.B. Alkylendioldi(meth)-acrylate, Polyesterdi-(meth)-acrylate, Divinylbenzol, Tri-Vinylbenzol, Triallylcyanurat, Allyl-(meth)-acrylat, Butadien oder Isopren.

Die Kautschuke liegen in den Pfropfpolymerisaten B in Form wenigstens partiell vernetzter Teilchen eines mittleren Durchmessers ($d_{50}$) von 0,09 bis 5 µm, insbesondere 0,1 bis 1 µm, vor. Die Pfropfcopolymerisate B können durch radikalische Pfropfcopolymerisation der eingangs definierten Monomerengemische aus B.1.1 wobei kernsubstituierte Styrole bevorzugt Halogenstyrole und p-Methylstyrol sind und B.1.2 in Gegenwart der zu pfropfenden Alkylacrylatkautschuke B.2. hergestellt werden. Bevorzugte Herstellungsverfahren für die Pfropfpolymerisate B sind Emulsions-, Lösungs-, Masse- oder Suspensionspolymerisation.

Bevorzugte Copolymerisate C sind solche aus wenigstens einem Monomeren aus der Reihe Styrol, α-Methylstyrol,

Halogenstyrol, p-Methylstyrol gemäß C.1 mit wenigstens einem Monomeren aus der Reihe Acrylnitril, Methacrylnitril, Methylmethacrylat, Maleinsäureanhydrid gemäß C.2.

Solche Copolymerisate C entstehen bei der Pfropfpolymerisation zur Herstellung der Komponente B als Nebenprodukte, besonders dann, wenn große Mengen Monomere auf kleine Mengen Kautschuk gepfropft werden.

Die erfindungsgemäß einzusetzende Menge an Copolymerisat C nämlich 5 - 30 Gew.-Teile, bezogen auf 100 Gew.-Teile aus A + B + C, bezieht diese als Nebenprodukte der Pfropfpolymerisation im Pfropfpolymerisat enthaltenen Copolymerisate nicht mit ein.

Die Copolymerisate C sind harzartig, thermoplastisch und kautschukfrei. Besonders bevorzugte Copolymerisate C sind solche aus Styrol und Acrylnitril und gegebenenfalls Methylmethacrylat, solche aus α-Methylstyrol und Acrylnitril und gegebenenfalls Methylmethacrylat sowie solche aus Styrol, α-Methylstyrol und Acrylnitril und gegebenenfalls Methylmethacrylat.

Besonders bevorzugt enthält das Copolymerisat C 60 - 80 Gew.-% C.1- und 40 - 20 Gew.-% C.2-Einheiten.

Die Copolymerisate C sind bekannt und lassen sich durch radikalische Polymerisation, insbesondere durch Emulsions-, Suspensions-, Lösungs- oder Massepolymerisation herstellen. Sie besitzen vorzugsweise Molekulargewichte

$\bar{M}_w$ (Gewichtsmittel, ermittelt durch Lichtstreuung oder Sedimentation) von 15 000 bis 200 000.

Die Tetrafluorethylenpolymerisate D haben Fluorgehalte von 65 - 76 Gew.-%. Beispiele sind Polytetrafluorethylen, Tetrafluorethylen-Hexafluorpropylen-Copolymere und Tetrafluorethylen-Copolymerisate mit geringen Mengen fluorfreier copolymerisierbarer ethylenisch ungesättigter Monomerer.

Diese Polymerisate können nach bekannten Verfahren hergestellt werden, beispielsweise durch Polymerisation von Tetrafluorethylen in wäßrigem Medium mit einem freie Radikale bildenden Katalysator, wie Natrium-, Kalium- oder Ammoniumperoxidisulfat bei Drucken von 7 bis 71 $kg/cm^2$ und bei Temperaturen von 0 - 200°C (vgl. US-Patent 2 393 967).

Der Teilchendurchmesser dieser Tetrafluorethylenpolymerisate liegt im Bereich von 100 - 1000 µm und ihre Dichte im Bereich von 2,0 bis 2,3 $g/cm^3$.

Die synergistischen Komponenten E, Antimon- oder Wismuttrioxid bzw. -carbonat, werden vorzugsweise als feinteilige Pulver eingesetzt. Sie können auch als $Sb_2O_3$-Dispersionen mit Emulsionen der Pfropfpolymerisate B abgemischt und gemeinsam durch Koagulation zu Konzentraten aufgearbeitet werden. Solche Konzentrate eignen sich dann besonders gut zur Flammwidrigkeitsausrüstung von Thermoplasten (vgl. Europäische Patentschrift 1913).

$TiO_2$ wird als hydrophobes und gegenüber hochmolekularen, aromatischen Polycarbonaten inertes Pulver eingesetzt; das Material kann z.B. durch Belegen der Pigmentoberfläche mit hydrophoben Kunststoffen oder mit langkettigen Fettsäuren, hydrophobiert sein.

Geeignete niedermolekulare, organische Halogenverbindungen G sind im Prinzip alle, die bei der Herstellung und Verarbeitung der erfindungsgemäßen Formmassen nicht flüchtig und thermisch stabil sind, d.h. kein Halogen abspalten und somit im Brandfall ihre Flammschutzwirkung ausüben können. Insbesondere sind geeignet Decabromdiphenylether, Octabromdiphenyl, Octabromdiphenylether und Tribromtetrachlortoluol, ferner oligomere Bromverbindungen wie beispielsweise Oligocarbonate auf Basis Tetrabrombisphenol A.

Die erfindungsgemäßen Formmassen, bestehend aus den Komponenten A, B, C, D, E, F und gegebenenfalls G, sowie gegebenenfalls weiteren bekannten Zusätzen, wie Stabilisatoren, Fließmitteln, Antistatika und/oder Entformungsmitteln, können hergestellt werden, indem man die Bestandteile mischt und bei Temperaturen von 200° C bis 330° C in üblichen Vorrichtungen wie Innenknetern, Extrudern oder Doppelwellenschnecken schmelzcompoundiert oder schmelzextrudiert.

Gegenstand der Erfindung ist somit auch ein Verfahren zur Herstellung von thermoplastischen Formmassen bestehend aus den Komponenten A, B, C, D, E, F und gegebenenfalls G, Stabilisatoren, Fließmitteln, Antistatika und/oder Entformungsmitteln, das dadurch gekennzeichnet ist, daß man

die Komponenten A, B, C, D, E, F und gegebenenfalls G, Stabilisatoren, Fließmittel, Antistatika und/oder Entformungsmittel mischt und dann bei Temperaturen von 200 -330° C in üblichen Vorrichtungen schmelzcompoundiert oder schmelzextrudiert.

Die einzelnen Bestandteile können in bekannter Weise sowohl sukzessive als auch simultan gemischt werden bei etwa 20° C oder auch bei höherer Temperatur.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z.B. für Haushaltsgeräte wie Saftpressen, Kaffeemaschinen, Mixer) oder Abdeckplatten für den Bausektor und Teile für den Kfz-Sektor. Sie werden insbesondere auf dem Gebiet der Elektronentechnik, z.B. für Schalterblenden, Steckdosen, Steckerleisten und Schaltkästen eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Teilchendurchmesser bedeutet immer mittlere Teilchendurchmesser $d_{50}$, ermittelt durch Ultrazentrifugenmessungen nach W. Scholtan et al., Kolloid-Z und Z. Polymere (1972, S. 782-796).

0229956

## Beispiele

Komponenten

A.

Copolycarbonat auf Basis von Bisphenol A mit 10 Gew.-% Tetrabrombisphenol A und einer relativen Lösungsviskosität von 1,284, gemessen in $CH_2Cl_2$ bei 25° C und einer Konzentration von 0,5 g/l; Gehalt an Brom: ca. 5 Gew.-%.

B.

SAN-Pfropfpolymerisat von 40 Gew.-% Styrol-Acrylnitril-Gemisch (im Gewichtsverhältnis von 72:28) auf 60 % teilchenförmigen Polybutylacrylatkautschuk, eines mittleren Teilchendurchmessers ($d_{50}$) von 0,5 µm, deren Teilchen Butadienkerne von 0,1 µm Durchmesser enthalten, hergestellt durch Emulsionspolymerisation gemäß DE-OS 2 259 564.

C.

Styrol-Acrylnitril-Copolymerisat mit einem Styrol-Acrylnitril-Verhältnis von 72:28 und einer Grenzviskosität von $[\eta]$ = 0,55 dl/g (Messung in Dimethylformamid bei 20° C).

D.

Polytetrafluorethylen in Pulverform mit einem Teilchendurchmesser von 500 - 650 µm und einer Dichte von 2,18 $g/cm^2$ (Hostaflen TF 2026® der Hoechst AG).

E.

$SB_2O_3$.

F.
$TiO_2$.

G.
Tetrabrombisphenol-A-Oligocarbonat mit Phenyl-Endgruppen und einem Bromgehalt von 52 Gew.-%.

H.
SAN-Pfropfpolymerisat von 50 Gew.-% Styrol-Acrylnitril-Gemisch (im Gewichtsverhältnis von 72:28) auf 50 Gew.-% teilchenförmiges Polybutadien mit einem mittleren Teilchendurchmesser ($d_{50}$) von 0,4 µm, erhalten durch Emulsionspolymerisation.

I.
Monocarbonsäureester von Monoalkoholen (rein aliphatisch) mit einer Durchschnittskettenlänge von 39 C-Atomen (Loxiol G 47).

## Herstellung der erfindungsgemäßen Formmassen

Die Komponenten A bis I wurden auf einem Doppelwellenextruder (Werner und Pfleiderer) vom Typ ZSK 53 bei einer Temperatur von 230°C compoundiert.

Die Formkörper wurden, soweit nicht anders angegeben, auf einer Spritzgußmaschine bei 260°C hergestellt.

Die Kriechstromfestigkeit wurde gemäß DIN 53 480 gemäß Methode KC F an Platten der Abmessungen 60 x 40 x 2 mm, hergestellt bei 250°C bestimmt, wobei zwischen 2 Elektroden bei einer Spannung von 375 V eine Prüflösung ohne Entspannungszusatz getropft wird. Die Prüfung gilt als

bestanden, wenn sich 5 mal nach 101 Tropfen kein Kriechweg ausbildet und der Prüfling nicht brennt.

Die Kerbschlagzähigkeit wurde in Anlehnung an DIN 53 453/ISO R 179 an Stäben der Abmessung 50 x 6 x 4 mm bestimmt, wobei die Stäbe mit einer V-förmigen Kerbe der Kerbtiefe 2,7 mm, versehen wurden.

Die Wärmeformbeständigkeit nach Vicat wurde nach DIN 53 460 gemessen.

Die Formkörperoberfläche wurde an den Platten der Abmessung 60 x 40 x 2 mm, hergestellt bei 250°C, nach Ausprüfung der Kriechstromfestigkeit, gemäß KCF bei 375 V bestimmt.

Das Brandverhalten der Proben wurde nach UL-Subj. 94 V in Prüfkörperdicken von 2,5 bzw. 1,6 mm gemessen. Der UL-94-Test wird wie folgt durchgeführt.

Substanzproben werden zu Stäben der Abmessungen 127 x 12,7 x 2,5 bzw. 1,6 mm geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet, die Brenneigenschaften nach dem Zündvorgang werden beobachtet und danach die Proben bewertet. Zum Entzünden der Probe wird ein Bunsenbrenner mit einer 20 mm (3,8 inch) hohen blauen Flamme von Erdgas mit einem Wärmeinhalt von $3{,}73 \times 10^4$ $kJ/m^3$ (1,000 BUT per cubic foot) benutzt.

Die UL-94 V-O-Klassifizierung umfaßt die nachstehend beschriebenen Eigenschaften von Materialien, die gemäß der UL-94-Vorschrift geprüft werden. Die Polycarbonatformmassen in dieser Klasse enthalten keine Proben, die länger als 10 s nach jeder Einwirkung der Testflamme brennen, sie zeigen keine Gesamtflammzeit von mehr als 50 s bei der zweimaligen Flammwirkung auf jeden Probensatz; sie enthalten keine Proben, die vollständig bis hinauf zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL-94-Klassifizierungen bezeichnen Proben, die weniger flammwidrig und selbstverlöschend sind und die flammende Tropfen und Teilchen abgeben. Diese Klassifizierungen werden mit UL-94 V-1 und V-2 bezeichnet. "N. b." heißt "nicht bestanden" und ist die Klassifizierung von Proben, die an eine Nachbrennzeit von $\geq$ 30 s aufweisen.

Die Bestimmung der Glühdrahtbeständigkeit bei einer Glühdrahttemperatur von 960°C erfolgte gemäß EDF-Norm AH 60 E 01 an Platten der Abmessung 60 x 90 x 3 mm bzw. 60 x 90 x 2 mm.

Um die Prüfung zu bestehen, darf die Probe nicht vollständig verbrennen, nicht länger als 5 s weiterbrennen. Außerdem dürfen keine brennenden oder glühenden Teilchen auftreten. Der Versuch muß dabei 5mal durchgeführt werden.

| | | erfindungsgemäßer Versuch | Vergleichsversuche | | | | | | |
|---|---|---|---|---|---|---|---|---|---|
| A | (Gew.-Tl.) | 70 | 70 | 70 | 70 | 70 | 70 | 70 | 70 |
| B | " | 18 | 18 | 18 | 18 | | 15 | 15 | 18 |
| C | " | 12 | 12 | 12 | 12 | 12 | 15 | 15 | 12 |
| D | " | 0,2 | 0,2 | 0,1 | 0,2 | 0,1 | 0,1 | | |
| E | " | 2,4 | 2,4 | 2,4 | 2,4 | 2,4 | 2,4 | 2,4 | 2,4 |
| F | " | 8,0 | 8,0 | 8,0 | 8,0 | 8,0 | 2,0 | 7,0 | 7,0 |
| G | " | 2,0 | | | | | | | |
| H | " | | | | | 18,0 | | | |
| I | " | 0,5 | | 0,5 | 0,5 | 0,5 | 0,5 | 0,5 | 0,5 |
| Kriechstromfestigkeit | | best. | best. | best. | best. | n.b. | n.b. | best. | best. |
| UL-94 V 2,5 mm | | V 0 | V 0 | V 0 | V 0 | V 2 | n.b. | V 2 | V 2 |
| 1,6 mm | | V 0 | V 0 | V 0 | V 0 | V 2 | V 2 | V 2 | V 2 |
| Glühdraht 960°C (3,0 mm) | | best. | best. | best. | best. | n.b. | n.b. | n.b. | n.b. |
| (2,0 mm) | | best. | - | - | - | n.b. | n.b. | n.b. | n.b. |
| Vicat-B 120 (°C) | | 134 | 131 | 129 | 129 | 129 | 129 | 128 | 128 |
| Kerbschlagzähigkeit ($kJ/m^2$) | | 30,7 | 35,0 | 33,5 | 33,5 | 27,3 | 34,0 | 35,6 | 31,4 |
| Oberflächenbeschaffenheit | | + | + | + | + | - | - | - | - |

best. = bestanden
n.b. = nicht bestanden
\+ = Oberfläche geringfügig angegriffen
\- = Oberfläche stark angegriffen

## Patentansprüche

1. Thermoplastische Formmassen, enthaltend

A.
60 - 85 Gew.-% eines 3 - 20 Gew.-% Halogen enthaltenden Copolycarbonats aus einem zweiwertigen Phenol und einem zweiwertigen halogenierten Phenol,
B.
10 - 30 Gew.-% eines Pfropfpolymerisats aus

B.1.
5 - 90 Gew.-Teilen einer Mischung aus

B.1.1.
50 - 95 Gew.-% Styrol, α-Methylstyrol, kernsubstituiertem Styrol, Methylmethacrylat oder Mischungen daraus und

B.1.2.
50 - 5 Gew.-% (Meth)Acrylnitril, Methylmethacrylat, Maleinsäureanhydrid, N-substituiertem Maleinimid oder Mischungen daraus, auf

B.2.
95 - 10 Gew.-Teile eines Acrylatkautschuks mit einer Glastemperatur $T_G \leq 10^{0}$ C.

C.
5 - 30 Gew.-% eines thermoplastischen Copolymerisats aus

C.1.
50 - 95 Gew.-% Styrol, α-Methylstyrol, kernsubstituiertem Styrol, Methylmethacrylat oder Mischungen daraus und

C.2.
50 - 5 Gew.-% (Meth)Acrylnitril, Methylmethacrylat, Maleinsäureanhydrid, N-substituiertem Maleinimid oder Mischungen daraus, wobei sich die Prozentzahlen von A, B und C zu 100 addieren müssen,

D.
0,05 - 2,0 Gew.-Teile, bezogen auf A + B + C, eines Tetrafluorethylenpolymerisats mit einer Dichte von 2,0 bis 2,3 g/cm$^3$ und einem mittleren Teilchendurchmesser von 100 bis 1000 µm,

E.
1 - 5 Gew.-Teile, bezogen auf 100 Gew.-Teile A + B + C, Antimontrioxid, Antimoncarbonat, Wismuttrioxid oder Wismutcarbonat und

F.
4 - 12 Gew.-Teile, bezogen auf 100 Gew.-Teile A + B + C, Titandioxid und gegebenenfalls

G.
0 - 15 Gew.-Teile, bezogen auf 100 Gew.-Teile A + B + C einer niedermolekularen, organischen Halogenverbindung, wobei der Halogengehalt, resultierend aus den Komponenten A + G, jedoch 20 Gew.-%, bezogen auf Gesamtgewicht der Komponenten A + G, nicht übersteigt.

2. Formmassen gemäß Anspruch 1, dadurch gekennzeichnet, daß die Komponente B aus 30-80 Gew.-Teilen B.1 und 70-20 Gew.-Teilen B.2. hergestellt ist.

3. Formmassen gemäß Ansprüchen 1 und 2, dadurch gekennzeichnet, daß sie die Komponente D in Mengen von 0,1 - 1,0 Gew.-Teilen enthalten.

4. Formmassen gemäß Ansprüchen 1 bis 3, dadurch gekennzeichnet, daß sie die Komponente E in Mengen von 2 bis 4 Gew.-Teilen enthalten.

5. Formmassen gemäß Ansprüchen 1 bis 4, dadurch gekennzeichnet, daß sie die Komponente F in Mengen von 5 - 10 Gew.-Teilen enthalten.

6. Formmassen gemäß Ansprüchen 1 bis 5, bestehend aus den Komponenten A bis F und gegebenenfalls G, und zusätzlich mindestens einem Zusatz, ausgewählt aus der Gruppe der Stabilisatoren, Fließmittel, Antistatika und/oder Entformungsmittel.

7. Verfahren zur Herstellung der Formmassen der Ansprüche 1 bis 5, dadurch gekennzeichnet, daß man die Komponenten A bis F und gegebenenfalls G in an sich bekannter Weise mischt und danach bei Temperaturen von 200 bis 330° C in üblichen Vorrichtungen schmelzcompoundiert oder schmelzextrudiert.

8. Verfahren zur Herstellung der Formmassen des Anspruchs 6 gemäß Anspruch 7, dadurch gekennzeichnet, daß man mindestens einen Zusatz ausgewählt aus der Gruppe der Stabilisatoren, Fließmittel, Antistatika und Entformungsmittel einbezieht.

Europäisches Patentamt

# EUROPÄISCHER RECHERCHENBERICHT

0229956
Nummer der Anmeldung

EP 86 11 6929

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | EP-A-0 131 751 (BAYER)<br>* Ansprüche 1-4 *<br>--- | 1-8 | C 08 K 3/20<br>C 08 K 3/26<br>C 08 L 69/00 //<br>(C 08 L 69/00<br>C 08 L 51:00<br>C 08 L 25:04<br>C 08 L 35:06<br>C 08 L 33:12<br>C 08 L 27:18) |
| D,Y | FR-A-2 223 422 (BAYER)<br>* Ansprüche 1-4 *<br>--- | 1-8 | |
| A | DE-A-2 211 826 (GENERAL ELECTRIC)<br>* Ansprüche 1-9; Beispiel I *<br>----- | 1 | |
| | | | RECHERCHIERTE SACHGEBIETE (Int. Cl.4) |
| | | | C 08 L<br>C 08 K |

Der vorliegende Recherchenbericht wurde für alle Patentansprüche erstellt.

| Recherchenort | Abschlußdatum der Recherche | Prüfer |
|---|---|---|
| DEN HAAG | 31-03-1987 | DECOCKER L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82